# EUROPÄISCHE PATENTSCHRIFT

(11) **EP 1 774 472 B1**
(45) Veröffentlichungstag und Bekanntmachung des Hinweises auf die Patenterteilung: **06.07.2011**
(21) Anmeldenummer: 05773858.5
(22) Anmeldetag: 31.07.2005
(51) Int. Cl.: G06T 7/00

(54) **ANORDNUNG ZUR ABBILDUNG VON OBERFLÄCHENSTRUKTUREN DREIDIMENSIONALER OBJEKTE**
ARRANGEMENT FOR THE IMAGING OF SURFACE STRUCTURES OF THREE-DIMENSIONAL OBJECTS
ENSEMBLE SERVANT A REPRESENTER DES STRUCTURES SUPERFICIELLES D'OBJETS TRIDIMENSIONNELS

(30) Priorität: 30.07.2004 DE 102004037464
(43) Veröffentlichungstag der Anmeldung: 18.04.2007
(73) Patentinhaber: Heraeus Kulzer GmbH, 63450 Hanau (DE)
(72) Erfinder: KORDASS, Bernd, 17498 Neuenkirchen (DE); GÄRTNER, Christian, 17489 Greifswald (DE)
(74) Vertreter: Wolf, Jens
(86) Internationale Anmeldenummer: PCT/EP2005/008295
(87) Internationale Veröffentlichungsnummer: WO 2006/013074

(56) Entgegenhaltungen:
- DE-A1- 19 709 050
- DE-A1- 19 819 992
- DE-A1- 19 838 238
- AYOUB A F ET AL: "A three-dimensional imaging system for archiving dental study casts: a preliminary report." THE INTERNATIONAL JOURNAL OF ADULT ORTHODONTICS AND ORTHOGNATHIC SURGERY. 1997, Bd. 12, Nr. 1, 1997, Seiten 79-84, XP009057562 ISSN: 0742-1931
- REKOW E D ET AL: "Comparison Of Three Data Acquisition Techniques For 3-D Tooth Surface Mapping" ENGINEERING IN MEDICINE AND BIOLOGY SOCIETY, 1991. VOL.13: 1991., PROCEEDINGS OF THE ANNUAL INTERNATIONAL CONFERENCE OF THE IEEE ORLANDO, FL, USA 31 OCT.-3 NOV. 1991, NEW YORK, NY, USA,IEEE, US, 31. Oktober 1991 (1991-10-31), Seiten 344-345, XP010101545 ISBN: 0-7803-0216-8
- REDERT A ET AL: "Correspondence estimation in image pairs" IEEE SIGNAL PROCESSING MAGAZINE, IEEE SERVICE CENTER, PISCATAWAY, NJ, US, Bd. 16, Nr. 3, Mai 1999 (1999-05), Seiten 29-46, XP002155560 ISSN: 1053-5888
- R.A. LANE, N.A. THACKER: "Tutorial: Overview of Stereo Matching Research" TINA MEMO NO. 1994-001, 1. Dezember 1998 (1998-12-01), Seiten 1-10, XP002355354 Imaging Science and Biomedical Engineering Division, Medical School, University of Manchester, Manchester, GB
- PAUL L ET AL: "Digital documentation of individual human jaw and tooth forms for applications in orthodontics, oral surgery and forensic medicine" INDUSTRIAL ELECTRONICS SOCIETY, 1998. IECON '98. PROCEEDINGS OF THE 24TH ANNUAL CONFERENCE OF THE IEEE AACHEN, GERMANY 31 AUG.-4 SEPT. 1998, NEW YORK, NY, USA,IEEE, US, Bd. 4, 31. August 1998 (1998-08-31), Seiten 2415-2418, XP010308356 ISBN: 0-7803-4503-7

## Beschreibung

Die Erfindung betrifft eine Anordnung zur Abbildung von Oberflächenstrukturen dreidimensionaler Objekte gemäß dem Oberbegriff des Patentanspruchs 1.

Bei der Abbildung eines Objektes besteht häufig das Bestreben, nicht nur Informationen in einer Ebene, sondern auch senkrecht zu dieser in Form von Höhen- und Tiefeninformationen und damit räumliche Informationen bezüglich zumindest eines Teilbereiches des Objektes zu erhalten. Dies ist insbesondere immer dann notwendig, wenn dem Betrachter ein Eindruck über die Struktur und Oberflächenbeschaffenheit des betreffenden Objektes bezogen auf eine bestimmte Betrachtungssituation vermittelt werden muss. Falls auf der Grundlage einer solchen Abbildung des Objektes keine ausreichende Information für den betreffenden Anwendungsfall bereitgestellt werden kann, besteht grundsätzlich auch die Möglichkeit, das Objekt aus unterschiedlichen Betrachtungswinkeln zu erfassen und die damit vorliegenden Informationen zu einer dreidimensionalen Abbildung des Objektes oder von Teilbereichen desselben zu verwerten.

Zur detailgenauen, eine hohe Auflösung erfordernden Erfassung eines Objektes ist es bekannt, als Abtasteinheit für die digital zu erfassenden Informationen einen Flachbettscanner einzusetzen.

So ist aus der DE 197 09 050 A1 eine Anordnung zur bildhaften, farblichen Erfassung von räumlichen Gegenständen mit einem Flachbettscanner bekannt, bei der eine Zusatzoptik zum Einsatz kommt. Mit dieser Zusatzoptik wird eine Vergrößerung des Objektabstandes erreicht, so dass räumliche Objekte in ausreichendem Abstand vom Scanner auf einem drehbaren Objektträger angeordnet werden können. Mit dem drehbaren Objektträger wird das Objekt unter verschiedenen Ansichten digital erfasst. Eine geeignete Software erzeugt daraufhin dreidimensionale Datensätze von der Objektoberfläche.

Eine solche Lösung eignet sich für die Erfassung farbiger, räumlicher Objekte, jedoch ist eine exakte Bestimmung der verschiedenen Drehwinkel, unter denen das Objekt optisch erfasst worden ist, nicht ohne Weiteres möglich, so dass eine hinreichend genaue Kombination der Einzelbilder zu einem Gesamtbild zumindest erschwert wird.

Weiterhin wird in der DE 198 19 992 A1 eine Einrichtung zur Herstellung von dreidimensionalen Aufnahmen von Gegenständen mittels optischer Scanner und ein Verfahren zur dreidimensionalen Objekterfassung beschrieben. Bei einem solchen Verfahren wird der Gegenstand zeitlich aufeinanderfolgend und/oder gleichzeitig in zwei oder mehreren Aufnahmemodi erfasst, wonach die erfassten Daten gespeichert und zu einem räumlichen Modell rechnermäßig verarbeitet werden.

Die Realisierung einer solchen Lösung ist infolge der Notwendigkeit einer exakten Bestimmung der Relativlage des Objektes zur optischen Scan-Einrichtung aufwändig, insbesondere dann, wenn das betreffende Objekt zeitversetzt in verschiedenen Positionen von der Scan-Einrichtung erfasst werden muss.

Besteht ein Objekt zudem aus mehreren Teilobjekten, die sich funktions- oder verwendungsbedingt in einer bestimmten Relativlage zueinander befinden, können die Teilobjekte oft nicht vollständig oder nur mit erheblichem Aufwand und vergleichsweise geringer Abbildungsgenauigkeit erfasst werden.

Auch sind bereits aus Veröffentlichungen, so aus AYOUB A. F. ET AL: "A three-dimensional imaging system for archiving dental study casts: A preliminary report" THE INTERNATIONAL JOURNAL OF ADULT ORTHODONTICS AND ORTHOGNATHIC SURGERY, Bd. 12, Nr. 1, 1997, Seiten 79-84 und aus REKOW E. D. ET AL: "Comparison of three data aquisition techniques for 3-D tooth surface mapping" ENGINEERING IN MEDICINE AND BIOLOGY SOCIETY, Bd. 13, 1991, Seiten 344-345, Anordnungen zur Abbildung von Oberflächenstrukturen bekannt, bei denen auf der Grundlage von zwei Bildausschnitten dreidimensionale Oberflächeninformationen gewonnen werden.

Der Erfindung liegt die Aufgabe zugrunde, eine Abbildung eines Objektes mit vergleichsweise geringem Aufwand in hoher, reproduzierbarer Genauigkeit zu erreichen.

Erfindungsgemäß wird die Aufgabe bei einer Anordnung zur Abbildung von Oberflächenstrukturen dreidimensionaler Objekte gemäß dem Oberbegriff des Patentanspruchs 1 dadurch gelöst, dass die Anordnung eine Selektionsschaltung zur Auswahl eines ersten Bildausschnittes, dessen optische Information aus einer ersten Betrachtungsrichtung resultiert und digital erfasst wird, und einen Folgebild-Modul aufweist, in dem eine aus einer geänderten Betrachtungsrichtung hervorgehende optische Information mindestens eines weiteren Bildausschnittes digital erfasst wird, und dass eine Abgleicheinheit vorgesehen ist, in der ein Abgleich der in dem ersten und der in mindestens einem weiteren Bildausschnitt enthaltenen digitalen Muster im Hinblick auf charakteristische, weitgehend übereinstimmende digitale Muster erfolgt und in der in Abhängigkeit vom Grad der Übereinstimmung der digitalen Muster eine Abgleichinformation generiert wird, die der Bildverarbeitungseinheit zur Ermittlung der raumbezogenen Parameter und zur Aggregation der Bildausschnitte des Objektes zu einem Gesamtbild zur Verfügung steht.

Mit der Erfindung wird die Möglichkeit geschaffen, aus einem Vergleich der in ausgewählten Bildausschnitten enthaltenen digitalen Muster und einer Differenzinformation im Sinne einer verbleibenden Nichtübereinstimmung digitaler Muster von mindestens zwei Bildausschnitten auf ein dreidimensionales Gesamtbild zu schließen. Ein Rückgriff auf Parameter, die die Absolutlage des Objektes im Raum oder die Relativlage von Scan-Einrichtung und Objekt bei Scan-Prozessen erfassen, ist hierbei nicht erforderlich.

Eine solche Anordnung wird daher insbesondere dann zum Einsatz kommen, wenn die Bestimmung der Relativlage von Scan-Einrichtung und abzubildendem Objekt nur mit erheblichem Aufwand oder im gegebenen Umfeld nicht erfolgreich erfolgen kann.

In einer bevorzugten Ausführungsform der Erfindung weisen Selektionsschaltung und/oder Folgebild-Modul einen Referenzbaustein auf, in dem eine Änderung von Bildausschnittgröße und/oder -auflösung dahingehend erfolgt, dass sich voneinander unterscheidende charakteristische digitale Muster in dem betreffenden Bildausschnitt enthalten sind.

In der Abgleicheinheit ist bevorzugt ein Iterationsalgorithmus zur eindeutigen Bestimmung charakteristischer digitaler Muster in jedem der erfassten Bildausschnitte vorgesehen.

Dabei besteht die zweckmäßige Möglichkeit, den Iterationsalgorithmus dann zu aktivieren, wenn in der Abgleicheinheit zu jedem der in die Gesamtabbildung eingehenden Bildausschnitte ein reproduzierbares digitales Muster zumindest einmal vorliegt.

Weiterhin ist es von Vorteil, dass der Iterationsalgorithmus eine Veränderung des Informationsgehaltes eines digitalen Musters eines Bildausschnittes und im Ergebnis eines Iterationsschrittes eine Prüfung auf eindeutige Verifizierbarkeit einer entsprechenden Veränderung eines digitalen Musters in mindestens einem weiteren Bildausschnitt erlaubt.

In weiterer Ausgestaltung der Erfindung ist in die Abgleicheinheit eine der Erfassung eines Strukturänderungsgradienten eines digitalen Musters dienende Strukturerfassungseinheit implementiert. Mit dieser Strukturerfassungseinheit werden strukturstarke Segmente innerhalb eines Teilbereiches erfasst und einer Auswertung zugeführt.

Weisen die abzubildenden Objekte nur eine geringe, einer Auswertung nicht ohne Weiteres zugängliche Strukturierung auf, so kann dieser eine zur Objektoberfläche lagebestimmte Ergänzungsstruktur überlagert sein.

Eine solche Möglichkeit ist beispielsweise realisierbar, in dem durch Lichtprojektion ein optisches Muster auf der Oberfläche des abzubildenden Objektes erzeugt wird, etwa als Schattenwurf eines Linienmusters einer Folie, die unter dem Objekt platziert und von der Lichtquelle der Scan-Einrichtung beleuchtet wird. Die Auswertung der projizierten Schattenmuster kann in diesem Fall durch Nutzung einer geeigneten Software erfolgen.

Weiterhin liegt es auch im Rahmen der Erfindung, dass das Material für die Herstellung des Objektes Beimischungen enthält, die im Ergebnis des Herstellungsprozesses Bestandteil der Oberfläche des Objektes sind.

Gemäß einer technisch vorteilhaften Ausgestaltung der Erfindung weist die Anordnung einen Objektträger aus Glas oder anderweitig optisch transparentem Material für das abzubildende Objekt auf, wobei der Objektträger Bestandteil eines Flachbettscanners sein kann.

In einer weiteren bevorzugten Ausführungsform der Erfindung weist die Anordnung eine Positionierungseinrichtung zur Positionierung des Objektes relativ zum Objektträger auf, wobei die Positionierungseinrichtung vorzugsweise derart ansteuerbar ist, dass sich das Objekt im Ergebnis der Positionierung in einer für den Scan-Vorgang optimierten Ausrichtung befindet.

Besteht das Objekt aus mindestens zwei, sich in einer funktionsbedingten Referenzlage zueinander befindenden Teilobjekten, ist erfindungsgemäß eine Korrelationsvorrichtung vorgesehen, mit der mindestens zwei Teilobjekte derart verbunden sind, dass mindestens eines der Teilobjekte in Vorbereitung einer optischen Erfassung der Oberfläche der mindestens zwei Teilobjekte in eine sich von der Referenzlage unterscheidende Abbildungslage bewegbar ist. In der Abbildungslage erfolgt die optische Erfassung der Teilobjekte und der die Teilobjekte verbindenden Korrelationsvorrichtung. Aus den in der Abbildungslage gewonnenen Daten über die Teilobjekte und über die Korrelationsvorrichtung sowie aus der Kenntnis der an die Korrelationsvorrichtung gebundenen, verifizierbaren Lageänderung des mindestens einen Teilobjektes aus der Referenzlage in die Abbildungslage wird die Referenzlage der mindestens zwei Teilobjekte rechnerisch ermittelt.

Bei dem abzubildenden Objekt kann es sich um einen Gegenstand einer zahnmedizinischen Anwendung handeln, der bedarfsweise eine Ergänzungsstruktur trägt, die die Auswahl eines geeigneten digitalen Musters erleichtert.

Im Zusammenhang mit einer zahnmedizinischen Anwendung besteht die Möglichkeit eines Einsatzes der erfindungsgemäßen Anordnung für eine Erfassung, Darstellung, Dokumentation, Archivierung und/oder Analyse von Kiefer- oder Zahnmodellen, von Kiefer- oder Zahnabformungen, von Bissregistraten, von Biss- bzw. Kieferrelationsregistraten und/oder von Präparationen der Zähne.

Erfindungsgemäß ist diese Anordnung dadurch gekennzeichnet, dass sie eine Korrelationsvorrichtung aufweist, über die oder mit der mindestens zwei Teilobjekte in vorwählbarer, definierter Lagebeziehung verbunden sind, dass die Korrelationsvorrichtung für eine an die Korrelationsvorrichtung gebundene, reproduzierbare Relativlageänderung der Teilobjekte zueinander ausgebildet ist, dass mindestens eines der Teilobjekte gebunden an die Korrelationsvorrichtung aus einer funktionsbestimmten, in eine sich von dieser unterscheidende, für eine optische Erfassung gemeinsam mit mindestens einem weiteren Teilobjekt geeignete Abbildungslage bewegbar ist, in welcher die optische Erfassung der Teilobjekte und der die Teilobjekte verbindenden Korrelationsvorrichtung erfolgt, und dass die Anordnung eine Zuordnungseinheit aufweist, in der die in Abbildungslage gewonnenen und in der Digitalisierungseinheit gespeicherten Daten zur Oberflächenstruktur der Teilobjekte mit in einem Referenzmodul aufgezeichneten Informationen über die Lageänderung mindestens eines Teilobjektes aus der Referenzlage in die Abbildungslage verknüpft werden, so dass die Referenzlage der Teilobjekte zueinander unter Einbeziehung der Daten zur Oberflächenstruktur der Teilobjekte rechnerisch rekonstruierbar ist.

Die Erfindung ist mit dem Vorteil verbunden, dass ein Objekt bildende Teilobjekte, deren Oberflächenstrukturen bei bestehender Integration in das Objekt nicht oder nur mit erheblichem Aufwand zugänglich sind, in einem rationellen Scan-Vorgang gleichzeitig und in hoher Auflösung optisch erfasst werden können, ohne auf die Information ihrer ursprünglichen Relativlage zueinander verzichten zu müssen.

Um Teilobjekte auch dreidimensional darstellen zu können, wird in bevorzugter Ausgestaltung der Erfindung ein Teilobjekt in Abbildungslage aus unterschiedlichen Betrachtungsrichtungen erfasst. Die derart gewonnenen Datensätze werden in der Digitalisierungseinheit gespeichert und in einer Bildverarbeitungseinheit zu einem dreidimensionalen Gesamtbild aufbereitet.

Die Anordnung kann eine Selektionsschaltung zur Auswahl eines ersten Bildausschnittes eines Teilobjektes, dessen optische Information aus einer ersten Betrachtungsrichtung resultiert und digital erfasst wird, und einen Folgebild-Modul aufweisen, in dem eine aus einer geänderten Betrachtungsrichtung hervorgehende optische Information mindestens eines weiteren Bildausschnittes dieses Teilobjektes digital erfasst wird. Auch ist eine Abgleicheinheit vorgesehen, in der ein Abgleich der in dem ersten und der in mindestens einem weiteren Bildausschnitt enthaltenen digitalen Muster im Hinblick auf charakteristische, weitgehend übereinstimmende digitale Muster erfolgt und in der in Abhängigkeit vom Grad der Übereinstimmung der digitalen Muster eine Abgleichinformation generiert wird, die der Bildverarbeitungseinheit zur Ermittlung der raumbezogenen Parameter und zur Aggregation der Bildausschnitte zu einem dreidimensionalen Gesamtbild des Teilobjektes zur Verfügung steht.

In zweckmäßiger Ausgestaltung der Erfindung ist die Korrelationsvorrichtung in die sich in Referenzlage befindenden Teilobjekte eingesetzt. Dabei kann die Korrelationsvorrichtung als Achse ausgebildet sein, um die die Teilobjekte schwenkbar angeordnet sind.

Weiterhin besteht auch die Möglichkeit, die Korrelationsvorrichtung und die Teilobjekte über Anschlussbereiche starr zu verbinden und die Korrelationsvorrichtung mit einer schwenk- und/oder drehbeweglichen Basis zu versehen, die vorzugsweise als Kugelgelenk ausgebildet ist.

Als Einrichtung zur optischen Erfassung der Oberfläche von mindestens zwei Teilobjekten kommt bevorzugt ein Flachbettscanner oder Laserscanner zum Einsatz.

Bei dem aus den abzubildenden Teilobjekten bestehenden Objekt kann es sich um einen Gegenstand einer zahnmedizinischen Anwendung handeln, bei der als Referenzlage die Relativlage von Oberkiefer und Unterkiefer zueinander erfasst wird.

Die erfindungsgemäße Anordnung ist insbesondere geeignet zur Erfassung, Darstellung, Dokumentation, Archivierung und/oder Analyse von Kiefer- oder Zahnmodellen, von Kiefer- oder Zahnabformungen, von Bissregistraten, von Biss- bzw. Kieferrelationsregistraten und/oder von Präparationen der Zähne.

Die Erfindung soll nachfolgend anhand eines Ausführungsbeispieles mit zugehörigen Zeichnungen näher erläutert werden.

Es zeigen
- Fig. 1: eine Einrichtung zur zweidimensionalen optischen Erfassung eines Datensatzes von einem Zahnmodell,
- Fig. 2: eine Einrichtung gemäß Fig. 1 zur Erfassung eines weiteren Datensatzes mit bezogen auf die Abtastrichtung seitlich versetztem Zahnmodell,
- Fig. 3: ein Blockschaltbild der erfindungsgemäßen Anordnung,
- Fig. 4: eine Darstellung des Prinzips der Auswahl zusammengehöriger Bildausschnitte auf der Grundlage charakteristischer digitaler Muster,
- Fig. 5: einen Objektträger einer Scan-Einrichtung mit Positioniereinrichtung für ein Kiefermodell,
- Fig. 6: durch eine Korrelationsvorrichtung verbundene Kiefermodelle in Referenzlage,
- Fig. 7: durch eine Korrelationsvorrichtung verbundene Kiefermodelle in Abbildungslage und
- Fig. 8: Kiefermodelle in Abbildungslage mit gegenüber den Fig. 6 und 7 veränderter Korrelationsvorrichtung.

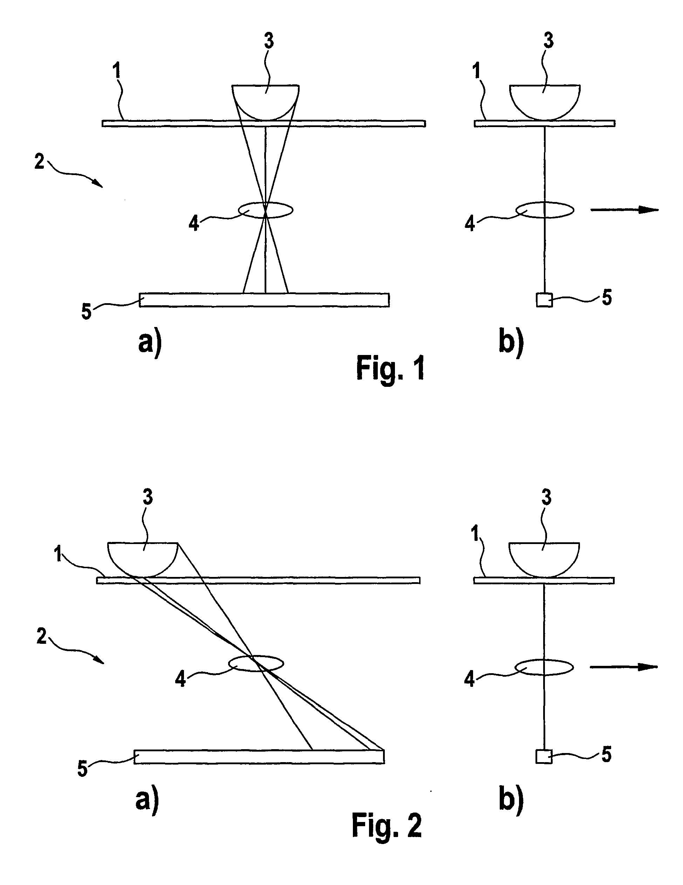

Zur Durchführung eines Scan-Vorganges befindet sich auf dem Vorlagenglas 1 eines in Fig. 1 nur schematisch dargestellten Flachbettscanners 2 ein Zahnmodell 3, dessen Oberfläche bei einer Bewegung gemeinsam mit dem Vorlagenglas 1 über eine Optik 4 von einem CCD-Zeilensensor 5 digital erfasst wird (Fig. 1a). Die Abtastrichtung des Flachbettscanners 2 ist zur besseren Veranschaulichung des Scan-Vorganges in Fig. 1b durch einen Richtungspfeil in einer um 90 Grad gegenüber Fig. 1a gedrehten Darstellung der Scan-Einrichtung erfasst.

Auf der Grundlage einer solchen, zeilenweise erfolgenden digitalen Erfassung der Oberfläche des Zahnmodells 3 mit Hilfe eines Flachbettscanners 2, dessen Funktionsweise dem Fachmann hinreichend bekannt ist und daher keiner weiteren Erläuterung bedarf, wird ein erster Gesamtbilddatensatz 6 des Zahnmodells 3 in einem Datenspeicher 7 in digitaler Form abgelegt.

Im Rahmen eines weiteren Scan-Vorganges, bei dem das Zahnmodell 3, wie in Fig. 2a dargestellt, bezogen auf die Darstellung in Fig. 1a seitlich versetzt auf dem Vorlagenglas 1 angeordnet ist, entsteht ein weiterer Gesamtbilddatensatz 8, der im Datenspeicher 7 oder an einem anderen geeigneten Speicherort zur Ablage kommt und gemeinsam mit dem Gesamtbilddatensatz 6 für eine weitere Auswertung der Daten zur Verfügung steht. Auch für diesen Scan-Vorgang wird die Abtastrichtung veranschaulicht, indem in Fig. 2b in einer gegenüber Fig. 2a um 90 Grad gedrehten Darstellung ein Richtungspfeil eingetragen ist.

Da sich die Gesamtbilddatensätze 6 und 8 auf verschiedene, bezogen auf die Abtastrichtung seitlich versetzte Objektpositionen des Zahnmodells 3 beziehen, werden strukturell abgrenzbare Bereiche des Objektes in den Gesamtbilddatensätzen 6 und 8 unterschiedlich erfasst, so dass bei einem Vergleich der einen strukturell abgrenzbaren Bereich betreffenden digitalen Daten aus der Art der Abweichung der Daten voneinander eine Differenzinformation bereitgestellt werden kann, die im Ergebnis einer gezielten Datenaufbereitung die Gewinnung räumlicher Informationen ermöglicht.

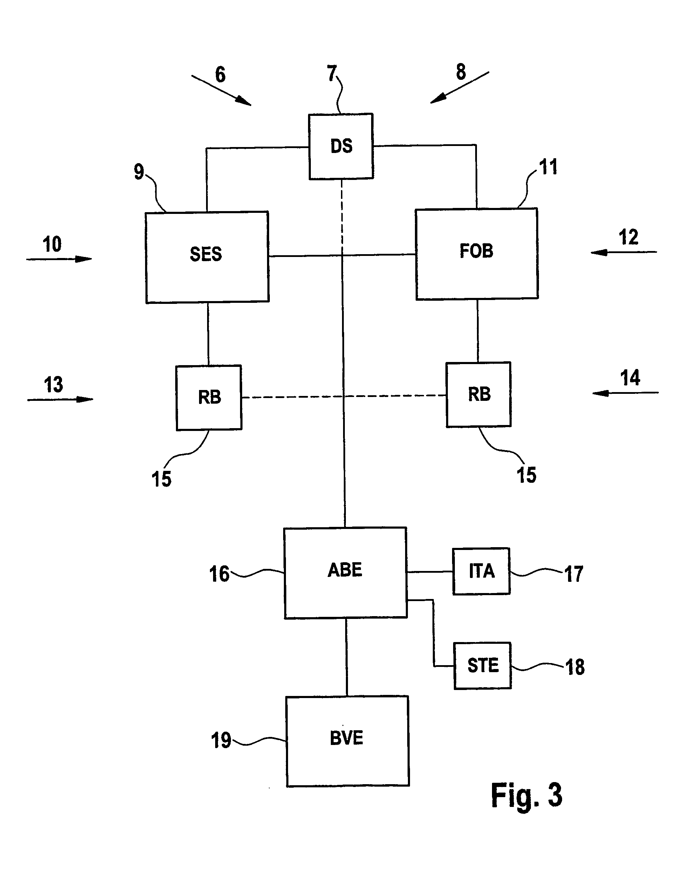

In Umsetzung dieses Prinzips erfolgt über eine Selektionsschaltung 9, wie sie Bestandteil der in Fig. 3 dargestellten erfindungsgemäßen Anordnung ist, die Auswahl eines ersten Bildausschnittes 10 aus einem der Gesamtbilddatensätze 6 oder 8. Aus dem anderen der Gesamtbilddatensätze 8 oder 6, der sich auf eine veränderte Position des Zahnmodells 3 auf dem Flachbettscanner 2 während des Scan-Vorganges bezieht, wird in einem Folgebild-Modul 11 ein weiterer Bildausschnitt 12 bestimmt. Die in den beiden Bildausschnitten 10 und 12 existierenden digitalen Muster 13 und 14 erfahren in einem Referenzbaustein 15 eine Änderung der Bildausschnittgröße und/oder -auflösung, so dass sich voneinander unterscheidende charakteristische digitale Informationen in Form abgrenzbarer Pixel-Cluster in jedem der betreffenden Bildausschnitte 10 und 12 enthalten sind.

Um die in verschiedenen Bildausschnitten 10 und 12 befindlichen Pixel-Cluster auf den Grad ihrer Übereinstimmung prüfen zu können, ist eine Abgleicheinheit 16 vorgesehen, die einen Iterationsalgorithmus 17 aufweist, der im Ergebnis der Iteration zu einer eindeutigen Bestimmung charakteristischer digitaler Muster 13 und 14 in jedem der erfassten Bildausschnitte 10 und 12 führt.

In die Abgleicheinheit 16 kann weiterhin eine Strukturerfassungseinheit 18 implementiert sein, die der Erfassung eines Strukturänderungsgradienten eines digitalen Musters dient, wodurch die Auswahl unterscheidungsfähiger Pixel-Cluster erleichtert wird.

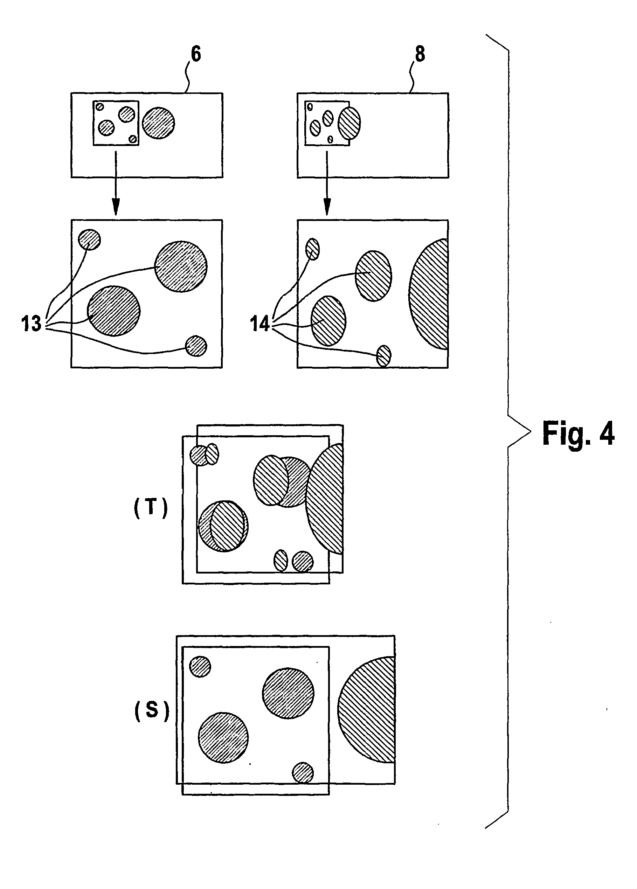

Die Verarbeitung der Gesamtbilddatensätze 6 und 8 in einer Bildverarbeitungseinheit 19 erfolgt gemäß der Darstellung in Fig. 4. Die Gesamtbilddatensätze 6 und 8 sind infolge der jeweils unterschiedlichen Relativlage von Zahnmodell 3 und Flachbettscanner 2 nicht deckungsgleich, so dass auch die aus den Gesamtbilddatensätzen 6 und 8 als Pixel-Cluster extrahierten digitalen Muster 13 und 14 nicht übereinstimmen und zueinander verzerrt und in der Ebene translatorisch versetzt erscheinen. Zur Ermittlung der Art der Verzerrung und der Größe des translatorischen Versatzes der digitalen Muster 13 und 14 wird vorzugsweise zeilen- und spaltenweise ein Vergleich der Pixel-Cluster durchgeführt. Falls ein solcher Vergleich infolge einer nicht ausreichenden Inhomogenität der digitalen Muster 13 und 14 keine zuverlässige Differenzinformation zulässt, kann zur Erhöhung der Präzision fallweise eine Änderung der Größe und/oder der Auflösung der Bildausschnitte 10 und 12 erfolgen. In der Abgleicheinheit 16 werden die digitalen Muster 13 und 14 durch translatorische und erforderlichenfalls auch rotatorische Transformation (T) und anschließende Skalierung (S) derart einander überlagert, dass die Differenz der beiden Pixel-Cluster ein Minimum erreicht. Hierfür kann vorteilhaft die Methode der bitweisen Subtraktion zum Einsatz kommen. Die so gewonnene Differenzinformation fließt als Eingangsgröße in die Bildbearbeitungseinheit 19 ein, in der für die Bildausschnitte 10 und 12 zu den einzelnen Bildpunkten in der x-y-Ebene jeweils eine z-Koordinate generiert wird. Unter Berücksichtigung von dem Anwendungsfall angepassten Korrektur-und Eichfaktoren entsteht daraus in der Bildverarbeitungseinheit 19 ein dreidimensionaler Datensatz.

Somit kann über die Bildverarbeitungseinheit 19 ein räumliches Abbild des Zahnmodells 3 abgerufen werden, ohne auf Parameter zurückgreifen zu müssen, die die Positionierung des Zahnmodells 3 auf dem Flachbettscanner 2 betreffen.

Zur Gewährleistung einer ausreichend differenzierten Struktur des Zahnmodells 3 als Voraussetzung für eine verwertbare Differenzinformation der Bildausschnitte 10 und 12 kann die Oberfläche des Zahnmodells 3 eine Ergänzungsstruktur aufweisen, wie sie beispielsweise durch Lichtprojektion unterschiedlicher Intensität erzeugt werden kann.

Weiterhin besteht die Möglichkeit Haftpartikel auf die Oberfläche des Zahnmodells 3 aufzubringen, was zweckmäßig über ein Sprühverfahren, bei dem bevorzugt Sprühabstand und Sprühdruck als Funktion der Haftpartikelverteilung einstellbar sind, realisiert werden kann.

Auch können für die Herstellung des Zahnmodells 3 stark strukturierte oder mit Pigmenten versehene Ausgangsstoffe Verwendung finden, die im Ergebnis des Herstellungsprozesses Bestandteil der Oberfläche des Zahnmodells 3 sind.

Zur Erzeugung einer geeigneten Oberflächenstruktur kann weiterhin auf die Oberfläche des Modells einwirkende und diese verändernde Laserstrahlung zum Einsatz kommen. Mit lichtsensitiven Beschichtungen, wie beispielsweise Fotolackbeschichtungen sind im Ergebnis des zugehörigen Entwicklungsprozesses entsprechende Ergebnisse erreichbar.

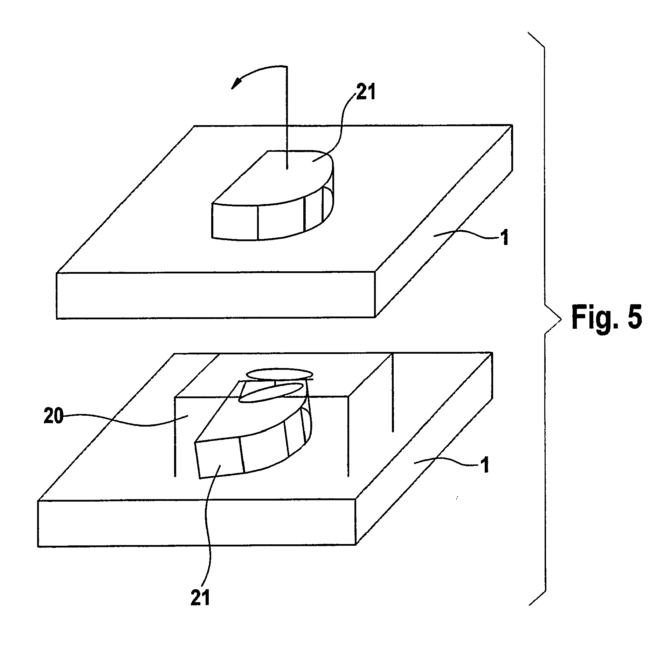

Die für die Erzeugung der Gesamtbilddatensätze 6 und 8 erforderliche Relativlageänderung von Objekt und Scan-Einrichtung kann durch geradlinige, auch begrenzt von Drehungen überlagerte Translationen des Objektes auf dem Objektträger bewirkt werden. Auch liegt es im Rahmen der Erfindung, den Objektträger in seiner Oberflächengestaltung hinsichtlich einer für den Scan-Vorgang besonders geeigneten Positionierung des Objektes zu modifizieren. Alternativ oder in Ergänzung hierzu besteht auch die Möglichkeit, eine Positionierungseinrichtung 20, wie sie in Fig. 5 zur Positionierung eines Kiefermodells 21 erfasst ist, einzusetzen, um vorzugsweise bei ebenen Objektträgern das Objekt zumindest für die Generierung eines Gesamtbilddatensatzes in eine anwendungsorientierte Position bringen zu können.

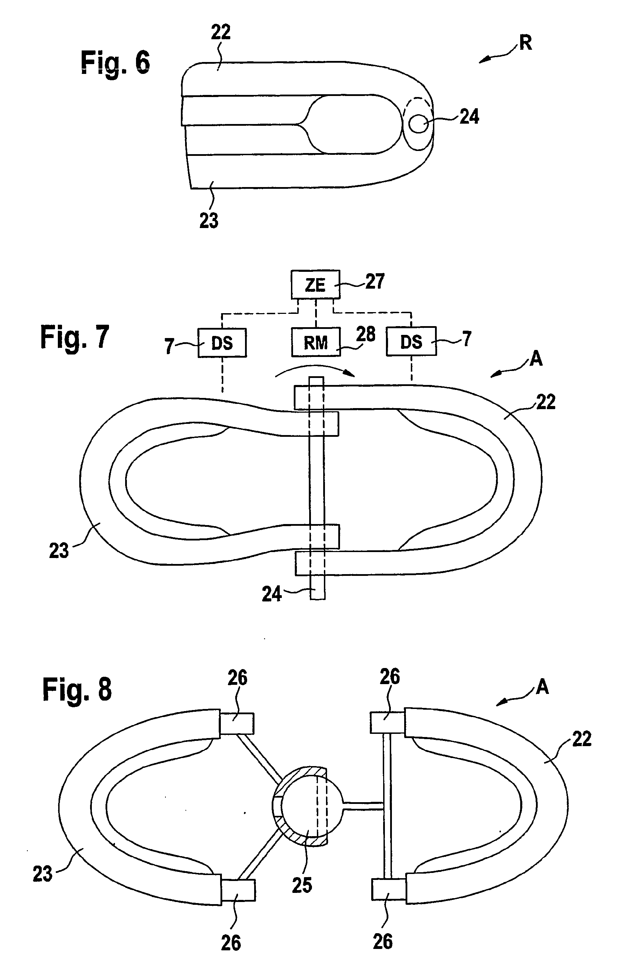

Gemäß der Darstellung in Fig. 6 besteht das Objekt aus Teilobjekten in Form der Kiefermodelle 22 und 23, die sich in einer funktionell bestimmten Referenzlage R zueinander befinden. Die nicht funktionsrelevanten Endbereiche der Kiefermodelle 22 und 23 sind in der Referenzlage R durch eine als Achse 24 ausgebildete Korrelationsvorrichtung spielfrei drehbar verbunden. Durch Drehung des Kiefermodells 22 um einen Winkel vorzugsweise von ca. 180° wird eine für die optische Erfassung der Oberflächenstruktur der Kiefermodelle 22 und 23 geeignete Abbildungslage A erreicht, wie sie in Fig. 7 dargestellt ist. Eine entsprechende Abbildungslage A ist auch mit einer gegenüber Fig. 7 veränderten Korrelationsvorrichtung realisierbar, die als Kugelgelenk 25 ausgebildet und über Anschlussbereiche 26 mit den Kiefermodellen 22 und 23 verbunden ist (Fig. 8).

In den dargestellten Abbildungslagen A der Kiefermodelle 22 und 23 (Fig. 7 und 8) erfolgt ein Scan-Vorgang, wie er bereits im Rahmen dieses Ausführungsbeispieles beschrieben wurde, wobei die Korrelationsvorrichtung 24 oder 25 in den Scan-Vorgang einbezogen ist.

In einer Zuordnungseinheit 27 werden die in Abbildungslage A gewonnenen und in der Digitalisierungseinheit 7 gespeicherten Daten zur Oberflächenstruktur der Kiefermodelle 22 und 23 mit in einem Referenzmodul 28 aufgezeichneten Informationen über die Lageänderung des Kiefermodells 22 aus der Referenzlage R in die Abbildungslage A verknüpft.

Auf einer solchen Grundlage ist die Referenzlage R der Kiefermodelle 22 und 23 zueinander unter Einbeziehung der Daten zur Oberflächenstruktur der Kiefermodelle 22 und 23 rechnerisch rekonstruierbar.

Die erfindungsgemäße Anordnung erlaubt mit vergleichsweise einfachen Mitteln, zahnmedizinischen Objekte, die auch aus funktionell verbundenen Teilobjekten gebildet sein können, mit hoher Genauigkeit reproduzierbar zwei- oder dreidimensional digital zu erfassen.

## Patentansprüche

1. Anordnung zur Abbildung von Oberflächenstrukturen dreidimensionaler Objekte mit einer Einrichtung zur optischen Erfassung der Oberfläche zumindest eines Teilbereiches des dreidimensionalen Objektes aus unterschiedlichen Positionen, einer der digitalen Speicherung der optischen Informationen über die zweidimensionale Oberflächenstruktur des zumindest einen Teilbereiches des Objektes dienende Digitalisierungseinheit und mit einer Bildverarbeitungseinheit, in der aus zweidimensionalen Bildausschnitten ein dreidimensionales Gesamtbild erzeugt wird, wobei die Anordnung eine Selektionsschaltung (9) zur Auswahl eines ersten Bildausschnittes (10), dessen optische Information aus einer ersten Betrachtungsrichtung resultiert und digital erfasst wird, und einen Folgebild-Modul (11) aufweist, in dem eine aus einer geänderten Betrachtungsrichtung hervorgehende optische Information mindestens eines weiteren Bildausschnittes (12) digital erfasst wird, und dass eine Abgleicheinheit (16) vorgesehen ist, in der ein Abgleich der in dem erstem (10) und der in mindestens einem weiteren Bildausschnitt (12) enthaltenen digitalen Muster (13, 14) im Hinblick auf charakteristische, weitgehend übereinstimmende digitale Muster erfolgt und in der in Abhängigkeit vom Grad der Übereinstimmung der digitalen Muster (13, 14) eine Abgleichinformation generiert wird, die der Bildverarbeitungseinheit (19) zur Ermittlung der raumbezogenen Parameter und zur Aggregation der Bildausschnitte (10, 12) des Objektes zu einem Gesamtbild zur Verfügung steht, **dadurch gekennzeichnet, dass** das Objekt aus mindestens zwei, sich in einer funktionsbedingten Referenzlage (R) zueinander befindenden Teilobjekten (22, 23) besteht und dass eine Korrelationsvorrichtung (24, 25) vorgesehen ist, mit der mindestens zwei Teilobjekte (22, 23) derart verbunden sind, dass mindestens eines der Teilobjekte (22) in Vorbereitung einer optischen Erfassung der Oberfläche der mindestens zwei Teilobjekte (22, 23) in eine sich von der Referenzlage (R) unterscheidende Abbildungslage (A) bewegbar ist, in der die optische Erfassung der Teilobjekte (22, 23) und der die Teilobjekte (22, 23) verbindenden Korrelationsvorrichtung (24, 25) erfolgt, wobei aus den in der Abbildungslage (A) gewonnenen Daten über die Teilobjekte (22, 23) und die Korrelationsvorrichtung (24, 25) sowie aus der Kenntnis der an die Korrelationsvorrichtung (24, 25) gebundenen, verifizierbaren Lageänderung des mindestens einen Teilobjektes (22) aus der Referenzlage (R) in die Abbildungslage (A) die Referenzlage (R) der mindestens zwei Teilobjekte (22, 23) rechnerisch ermittelt wird.

2. Anordnung zur Abbildung von Oberflächenstrukturen nach Anspruch 1, **dadurch gekennzeichnet, dass** Selektionsschaltung (9) und/oder Folgebild-Modul (11) einen Referenzbaustein (15) aufweisen, in dem eine Änderung von Bildausschnittgröße und/oder -auflösung dahingehend erfolgt, dass sich voneinander unterscheidende charakteristische digitale Muster (13, 14) in dem betreffenden Bildausschnitt (10, 12) enthalten sind.

3. Anordnung zur Abbildung von Oberflächenstrukturen nach Anspruch 2, **dadurch gekennzeichnet, dass** in der Abgleicheinheit (16) ein Iterationsalgorithmus (17) zur eindeutigen Bestimmung charakteristischer digitaler Muster (13, 14) in jedem der erfassten Bildausschnitte (10, 12) vorgesehen ist.

4. Anordnung zur Abbildung von Oberflächenstrukturen nach Anspruch 3, **dadurch gekennzeichnet, dass** der Iterationsalgorithmus (17) dann aktiviert wird, wenn in der Abgleicheinheit (16) zu jedem der in die Gesamtabbildung eingehenden Bildausschnitte (10, 12) ein reproduzierbares digitales Muster (13, 14) zumindest einmal vorliegt.

5. Anordnung zur Abbildung von Oberflächenstrukturen nach Anspruch 3 oder 4, **dadurch gekennzeichnet, dass** der Iterationsalgorithmus (17) eine Veränderung des Informationsgehaltes eines digitalen Musters (13, 14) eines Bildausschnittes (10, 12) und im Ergebnis eines Iterationsschrittes eine Prüfung auf eindeutige Verifizierbarkeit einer entsprechenden Veränderung eines digitalen Musters (13, 14) in mindestens einem weiteren Bildausschnitt (10, 12) erlaubt.

6. Anordnung zur Abbildung von Oberflächenstrukturen nach Anspruch 1 oder 3, **dadurch gekennzeichnet, dass** in die Abgleicheinheit (16) eine der Erfassung eines Strukturänderungsgradienten eines digitalen Musters (13, 14) dienende Strukturerfassungseinheit (18) implementiert ist.

7. Anordnung zur Abbildung von Oberflächenstrukturen nach Anspruch 1, **dadurch gekennzeichnet, dass** das abzubildende Objekt eine zur Objektoberfläche lagebestimmte Ergänzungsstruktur aufweist.

8. Anordnung zur Abbildung von Oberflächenstrukturen nach Anspruch 7, **dadurch gekennzeichnet, dass** durch Lichtprojektion ein optisches Muster auf der Oberfläche des abzubildenden Objektes erzeugt wird.

9. Anordnung zur Abbildung von Oberflächenstrukturen nach Anspruch 7, **dadurch gekennzeichnet, dass** das Material für die Herstellung des Objektes Beimischungen enthält, die im Ergebnis des Herstellungsprozesses Bestandteil der Oberfläche des Objektes sind.

10. Anordnung zur Abbildung von Oberflächenstrukturen nach Anspruch 1, **dadurch gekennzeichnet, dass** die Anordnung einen Objektträger (1) aus Glas oder anderweitig optisch transparentem Material für das abzubildende Objekt aufweist.

11. Anordnung zur Abbildung von Oberflächenstrukturen nach Anspruch 10, **dadurch gekennzeichnet, dass** der Objektträger (1) Bestandteil eines Flachbettscanners (2) ist.

12. Anordnung zur Abbildung von Oberflächenstrukturen nach Anspruch 10 oder 11, **dadurch gekennzeichnet, dass** eine Positionierungseinrichtung (20) zur Positionierung des Objektes relativ zum Objektträger (1) vorgesehen und derart ansteuerbar ist, dass sich das Objekt im Ergebnis der Positionierung in einer für den Scan-Vorgang optimierten Ausrichtung befindet.

13. Anordnung zur Abbildung von Oberflächenstrukturen nach Anspruch 1, 10 oder 11, **dadurch gekennzeichnet, dass** es sich bei dem abzubildenden Objekt um einen Gegenstand einer zahnmedizinische Anwendung handelt.

14. Anordnung zur Abbildung von Oberflächenstrukturen nach Anspruch 13, **dadurch gekennzeichnet, dass** diese für eine Erfassung, Darstellung, Dokumentation, Archivierung und/oder Analyse von Kiefer- (21) oder Zahnmodellen (3), von Kiefer- oder Zahnabformungen, von Bissregistraten, von Biss- bzw. Kieferrelationsregistraten und/oder von Präparationen der Zähne zum Einsatz kommt.

15. Anordnung zur Abbildung von Oberflächenstrukturen nach Anspruch 1, **dadurch gekennzeichnet, dass** zumindest ein Teilobjekt (22, 23) in Abbildungslage (A) aus unterschiedlichen Betrachtungsrichtungen erfasst wird, dass die betreffenden Datensätze in der Digitalisierungseinheit (7) gespeichert werden und dass die Anordnung eine Bildverarbeitungseinheit (19) aufweist, in der aus den Datensätzen ein dreidimensionales Gesamtbild erzeugt wird.

16. Anordnung zur Abbildung von Oberflächenstrukturen nach Anspruch 15, **dadurch gekennzeichnet, dass** die Anordnung eine Selektionsschaltung (9) zur Auswahl eines ersten Bildausschnittes (10) eines Teilobjektes (22, 23), dessen optische Information aus einer ersten Betrachtungsrichtung resultiert und digital erfasst wird, und einen Folgebild-Modul (11) aufweist, in dem eine aus einer geänderten Betrachtungsrichtung hervorgehende optische Information mindestens eines weiteren Bildausschnittes (12) dieses Teilobjektes (22, 23) digital erfasst wird, und dass eine Abgleicheinheit (16) vorgesehen ist, in der ein Abgleich der in dem ersten (10) und der in mindestens einem weiteren Bildausschnitt (12) enthaltenen digitalen Muster (13, 14) im Hinblick auf charakteristische, weitgehend übereinstimmende digitale Muster erfolgt und in der in Abhängigkeit vom Grad der Übereinstimmung der digitalen Muster (13, 14) eine Abgleichinformation generiert wird, die der Bildverarbeitungseinheit (19) zur Ermittlung der raumbezogenen Parameter und zur Aggregation der Bildausschnitte (10, 12) zu einem dreidimensionalen Gesamtbild des Teilobjektes (22, 23) zur Verfügung steht.

17. Anordnung zur Abbildung von Oberflächenstrukturen nach Anspruch 1, **dadurch gekennzeichnet, dass** die Korrelationsvorrichtung (24) in die sich in Referenzlage (R) befindenden Teilobjekte (22, 23) eingesetzt ist.

18. Anordnung zur Abbildung von Oberflächenstrukturen nach Anspruch 17, **dadurch gekennzeichnet, dass** die Korrelationsvorrichtung als Achse (24) ausgebildet ist, um die die Teilobjekte (22, 23) schwenkbar angeordnet sind.

19. Anordnung zur Abbildung von Oberflächenstrukturen nach Anspruch 1, **dadurch gekennzeichnet, dass** die Korrelationsvorrichtung (25) und die Teilobjekte (22, 23) über Anschlussbereiche (26) starr verbunden sind und die Korrelationsvorrichtung eine schwenk- und/oder drehbewegliche Basis (25) aufweist.

20. Anordnung zur Abbildung von Oberflächenstrukturen nach Anspruch 19, **dadurch gekennzeichnet, dass** die schwenk-und/oder drehbewegliche Basis der Korrelationsvorrichtung als Kugelgelenk (25) ausgebildet ist.

21. Anordnung zur Abbildung von Oberflächenstrukturen nach Anspruch 1 oder 15, **dadurch gekennzeichnet, dass** als Einrichtung zur optischen Erfassung der Oberfläche von mindestens zwei Teilobjekten ein Flachbettscanner (2) oder Laserscanner zum Einsatz kommt.

22. Anordnung zur Abbildung von Oberflächenstrukturen nach Anspruch 1 oder 15, **dadurch gekennzeichnet, dass** es sich bei den abzubildenden Teilobjekten (22, 23) um einen Gegenstand einer zahnmedizinische Anwendung handelt.

23. Anordnung zur Abbildung von Oberflächenstrukturen nach Anspruch 21, **dadurch gekennzeichnet, dass** die Referenzlage (R) die Relativlage von Oberkiefer und Unterkiefer zueinander erfasst.

24. Anordnung zur Abbildung von Oberflächenstrukturen nach Anspruch 21, **dadurch gekennzeichnet, dass** diese für eine Erfassung, Darstellung, Dokumentation, Archivierung und/oder Analyse von Kiefer- (21, 22, 23) oder Zahnmodellen (3), von Kiefer- oder Zahnabformungen, von Bissregistraten, von Biss- bzw. Kieferrelationsregistraten und/oder von Präparationen der Zähne zum Einsatz kommt.

## Claims

1. An arrangement for the imaging of surface structures of three-dimensional objects comprising a device for the optical recording of the surface of at least a partial region of the three-dimensional object from different positions, a digitisation unit used for the digital storage of the optical information on the two-dimensional surface structure of at least a partial region of the object and an image processing unit, in which an overall three-dimensional image is produced from two-dimensional image sections, wherein the arrangement exhibits a selection circuit (9) for the selection of a first image section (10), the optical information of which results from a first observational direction and is digitally recorded, and a subsequent image module (11), in which optical information resulting from a different observational direction of at least one further image section (12) is digitally recorded, and that a comparator unit (16) is provided, in which the digital patterns (13, 14) contained in the first (10) and at least one further image section (12) are compared in relation to characteristic, largely corresponding digital patterns and in which comparison information is generated, depending on the degree of matching of the digital patterns (13, 14), which are supplied to the image processing unit (19) for determination of the spatial parameters and for the aggregation of the image sections (10, 12) of the object to give an overall image, **characterised in that** the object is made up of at least two partial objects (22, 23) located in a functional reference position (R) relative to one another and that a correlating device (24, 25) is provided, to which at least two partial objects (22, 23) are connected, such that at least one of the partial objects (22) is movable in preparation for the optical recording of the surface of the at least two partial objects (22, 23) in an imaging position (A) differing from the reference position (R), in which the optical recording of the partial objects (22, 23) and the correlating device (24, 25) connecting the partial objects (22, 23) takes place, wherein the reference position (R) of the at least two partial objects (22, 23) is computed from the data on the partial objects (22, 23) and the correlating device (24, 25) obtained in the imaging position (A) and also from knowledge of the verifiable positional change linked to the correlating device (24, 25) of the at least one partial object (22) from the reference position (R) into the imaging position (A).

2. The arrangement for imaging surface structures according to claim 1, **characterised in that** the selection circuit (9) and/or the subsequent image module (11) exhibit a reference component (15), in which a change in the size and/or resolution of the image section takes place, such that characteristic digital patterns (13, 14) that differ from one another are contained in the image section (10, 12) concerned.

3. The arrangement for imaging surface structures according to claim 2, **characterised in that** an iteration algorithm (17) is provided in the comparator unit (16) for the clear determination of characteristic digital patterns (13, 14) in each of the recorded image sections (10, 12).

4. The arrangement for imaging surface structures according to claim 3, **characterised in that** the iteration algorithm (17) is activated when a reproducible digital pattern (13, 14) for each of the image sections (10, 12) included in the overall image is present at least once in the comparator unit (16).

5. The arrangement for imaging surface structures according to claim 3 or 4, **characterised in that** the iteration algorithm (17) permits a change in the information content of a digital pattern (13, 14) of an image section (10, 12) and allows a check for clear verifiability of a corresponding change in a digital pattern (13, 14) in at least one further image section (10, 12) in the result of an iteration step.

6. The arrangement for imaging surface structures according to claim 1 or 3, **characterised in that** a structure recording unit (18) serving to record a structural change gradient of a digital pattern (13, 14) is implemented in the comparator unit (16).

7. The arrangement for imaging surface structures according to claim 1, **characterised in that** the object being imaged exhibits a positionally determined additional structure in relation to the object surface.

8. The arrangement for imaging surface structures according to claim 7, **characterised in that** an optical pattern is produced on the surface of the object being imaged by light projection.

9. The arrangement for imaging surface structures according to claim 7, **characterised in that** the material used to produce the object contains admixtures, which are an element of the object's surface as a result of the production process.

10. The arrangement for imaging surface structures according to claim 1, **characterised in that** the arrangement exhibits an object carrier (1) made from glass or any other optically transparent material for the object being imaged.

11. The arrangement for imaging surface structures according to claim 10, **characterised in that** the object carrier (1) is a component part of a flatbed scanner (2).

12. The arrangement for imaging surface structures according to claim 10 or 11, **characterised in that** a positioning device (20) for positioning the object relative to the object carrier (1) is provided and controlled in such a manner that the object is optimally aligned for the scanning process as a result of the positioning.

13. The arrangement for imaging surface structures according to claim 1, 10 or 11, **characterised in that** the object being imaged is an object with a dental application.

14. The arrangement for imaging surface structures according to claim 13, **characterised in that** this is used for the recording, representation, documentation, storage and/or analysis of jaw (21) or tooth models (3), jaw or tooth impressions, bite registrations, bite or jaw relation registrations and/or tooth preparations.

15. The arrangement for imaging surface structures according to claim 1, **characterised in that** at least one partial object (22, 23) in imaging position (A) is recorded from different observational directions, that the data records concerned are stored in the digitisation unit (7) and that the arrangement exhibits an image processing unit (19), in which an overall three-dimensional image is produced from the data records.

16. The arrangement for imaging surface structures according to claim 15, **characterised in that** the arrangement exhibits a selection circuit (9) for the selection of a first image section (10) of a partial object (22, 23), the optical information of which results from a first observational direction and is digitally recorded, and a subsequent image module (11), in which optical information resulting from a different observational direction of at least one further image section (12) of this partial object (22, 23) is digitally recorded, and that a comparator unit (16) is provided, in which the digital patterns (13, 14) contained in the first (10) and at least one further image section (12) are compared in relation to characteristic, largely corresponding digital patterns and in which comparison information is generated, depending on the degree of matching of the digital patterns (13, 14), which are supplied to the image processing unit (19) for determination of the spatial parameters and for the aggregation of the image sections (10, 12) to give an overall three-dimensional image of the partial object (22, 23).

17. The arrangement for imaging surface structures according to claim 1, **characterised in that** the correlating device (24) is inserted in the partial objects (22, 23) located in the reference position (R).

18. The arrangement for imaging surface structures according to claim 17, **characterised in that** the correlating device is in the form of an axis (24), on which the partial objects (22, 23) are pivotally mounted.

19. The arrangement for imaging surface structures according to claim 1, **characterised in that** the correlating device (25) and the partial objects (22, 23) are rigidly connected across connection regions (26) and the correlating device exhibits, a pivoting and/or rotating base (25).

20. The arrangement for imaging surface structures according to claim 19, **characterised in that** the pivoting and/or rotating base of the correlating device is in the form of a universal joint (25).

21. The arrangement for imaging surface structures according to claim 1 or 15, **characterised in that** a flatbed scanner (2) or a laser scanner is used as the mechanism for optically recording the surface of at least two partial objects.

22. The arrangement for imaging surface structures according to claim 1 or 15, **characterised in that** the partial objects (22, 23) being imaged are an object with a dental application.

23. The arrangement for imaging surface structures according to claim 21, **characterised in that** the reference position (R) records the relative position of the upper jaw and the lower jaw to one another.

24. The arrangement for imaging surface structures according to claim 1, **characterised in that** used for the recording, representation, documentation, storage and/or analysis of jaw (21, 22, 23) or tooth models (3), jaw or tooth impressions, bite registrations, bite or jaw relation registrations and/or tooth preparations.

## Revendications

1. Dispositif d'imagerie de structures de surface d'objets en trois dimensions comportant un dispositif d'acquisition optique de la surface d'au moins une zone partielle de l'objet en trois dimensions depuis des positions différentes, une unité de numérisation servant à mémoriser l'information optique relative à la structure de surface en deux dimensions d'au moins une zone partielle de l'objet et comportant une unité de traitement d'image, dans lequel une image globale en trois dimensions est générée à partir des sections d'image en deux dimensions, dans lequel le dispositif présente un circuit de sélection (9) pour sélectionner une première section d'image (10), dont l'information optique est obtenue dans une première direction d'observation et acquise numériquement, et présente un module de séquence d'image (11), dans lequel une information optique d'au moins une autre section d'image (12) provenant d'une direction d'observation modifiée est acquise numériquement, et en ce que une unité de cadrage (16) est prévue, dans laquelle un cadrage du modèle numérique (13,14) contenu dans la première (10) et dans au moins une autre section d'image (12) a lieu au regard d'un modèle numérique caractéristique, sensiblement concordant et dans laquelle en fonction du degré de concordance du modèle numérique (13,14) une information de cadrage est générée, qui est mise à disposition de l'unité de traitement d'image (19) pour déterminer les paramètres spatiaux et pour l'agrégation des sections d'image (10,12) de l'objet en une image globale, **caractérisé en ce que** l'objet est constitué d'au moins deux objets partiels (22,23)se trouvant l'un par rapport à l'autre dans une position de référence (R) fonctionnelle et **en ce que** un dispositif de corrélation (24,25) est prévu, avec lequel au moins deux objets partiels (22,23) sont reliés de telle sorte que au moins un des objets partiels (22) soit déplaçable en préparation d'une acquisition optique de la surface d'au moins deux objets partiels (22,23) dans une position d'imagerie (A) différente de la position de référence (R), dans laquelle l'acquisition optique des objets partiels (22,23) et du dispositif de corrélation (24,25) reliant les objets partiels (22,23) a lieu, dans lequel d'après les données acquises relatives aux objets partiels (22,23) et au dispositif de corrélation (24, 25) dans la position d'imagerie (A) ainsi que d'après la connaissance de la variation de position d'au moins un objet partiel (22) vérifiable, liée au dispositif de corrélation (24,25) de la position de référence (R) à la position d'imagerie (A) la position de référence (R) d'au moins deux objets partiels (22,23) est déterminée par calcul.

2. Dispositif d'imagerie de structures de surface selon la revendication 1, **caractérisé en ce que** le circuit de sélection (9) et/ou le module de séquence d'image (11) présentent un module de référence (15), dans lequel une variation de la taille et/ou résolution de section d'image a lieu de telle sorte que des modèles numériques (13,14) caractéristique différents l'un de l'autre soient contenus dans la section d'image (10,12) concernée.

3. Dispositif d'imagerie des structures de surface selon la revendication 2, **caractérisé en ce que** dans l'unité de cadrage (16) un algorithme d'itération (17) pour la détermination univoque des modèles numériques caractéristiques (13,14) dans chacune des sections d'images (10,12) acquises est prévu.

4. Dispositif d'imagerie de structures de surface selon la revendication 3, **caractérisé en ce que** l'algorithme d'itération (17) est activé quand dans l'unité de cadrage (16)un modèle numérique reproductible (13,14) est présent au moins une fois par rapport à chacune des sections d'image (10,12) entrant dans l'imagerie globale.

5. Dispositif d'imagerie de structures de surface selon la revendication 3 ou 4, **caractérisé en ce que** l'algorithme d'itération (17) permet une variation du contenu informatif d'un modèle numérique (13,14) d'une section d'image (10, 12) et en conséquence d'une étape d'itération permet un contrôle de la faculté de vérification univoque d'une variation correspondante d'un modèle numérique (13,14) dans au moins une autre section d'image (10,12).

6. Dispositif d'imagerie de structures de surface selon la revendication 1 ou 3, **caractérisé en ce que** dans l'unité de cadrage (16) est implémentée une unité d'acquisition de structure (18) servant à acquérir un gradient de variation de surface d'un modèle numérique (13,14).

7. Dispositif d'imagerie de structures de surface selon la revendication 1, **caractérisé en ce que** l'objet à représenter par imagerie présente une structure complémentaire à position déterminée par rapport à la surface d'objet.

8. Dispositif d'imagerie de structures de surface selon la revendication 7, **caractérisé en ce que** par projection de lumière, un modèle optique est généré sur la surface de l'image à représenter par imagerie.

9. Dispositif d'imagerie de structures de surface selon la revendication 7, **caractérisé en ce que** le matériau utilisé pour la production de l'objet contient des mélanges, qui en conséquence du processus de fabrication sont partie intégrante de la surface de l'objet.

10. Dispositif d'imagerie de structures de surface selon la revendication 1, **caractérisé en ce que** le dispositif présente un support d'objet (1) en verre ou en un autre matériau transparent optiquement destiné à l'objet à représenter par imagerie.

11. Dispositif d'imagerie de structures de surface selon la revendication 10, **caractérisé en ce que** le support d'objet (1) est partie intégrante d'un scanneur à plat (2).

12. Dispositif d'imagerie de structures de surface selon la revendication 10 ou 11, **caractérisé en ce que** un dispositif de positionnement (20) pour positionner l'objet relativement au support d'objet (1) est prévu et peut être commandé de telle sorte que un objet se trouve en conséquence du positionnement dans un alignement optimisé par le processus de scannage.

13. Dispositif d'imagerie de structures d'objets selon la revendication 1,10 ou 11, **caractérisé en ce que** l'objet à représenter par imagerie consiste en un objet d'une application dentaire.

14. Dispositif d'imagerie de structures de surface selon la revendication 13, **caractérisé en ce que** celui-ci est employé pour l'acquisition, la représentation, la documentation, l'archivage et/ou l'analyse de modèles de dents (3) ou de mâchoires (21), de malformations de dents ou de mâchoires, d'enregistrements d'occlusion, d'enregistrements de relation de mâchoires ou d'occlusions et/ou de préparations des dents.

15. Dispositif d'imagerie de structures de surface selon la revendication 1, **caractérisé en ce que** au moins un objet partiel (22,23) est acquis dans la position d'imagerie (A) depuis des directions d'observation différentes, **en ce que** les jeux de données concernés sont mémorisés dans l'unité de numérisation (7) et **en ce que** le dispositif présente une unité de traitement d'image (19), dans laquelle une image globale en trois dimensions est générée d'après les jeux de données.

16. Dispositif d'imagerie de structures de surface selon la revendication 15, **caractérisé en ce que** le dispositif présente un circuit de sélection (9) pour sélectionner une première section d'image (10) d'un objet partiel (22,23), dont l'information optique est obtenue dans une première direction d'observation et acquise numériquement, et présente un module de séquence d'image (11), dans lequel une information optique provenant d'une direction d'observation modifiée d'au moins une autre section d'image (12) de cet objet partiel (22,23) est acquise numériquement, et **en ce que** une unité de cadrage (16) est prévue, dans laquelle un cadrage du modèle numérique (13,14) contenu dans la première (10) et dans au moins une autre section d'image (12) a lieu au regard d'un modèle numérique caractéristique, sensiblement concordant et dans laquelle en fonction du degré de concordance du modèle numérique (13,14) une information de cadrage est générée, qui est mise à disposition de l'unité de traitement d'image (19) pour déterminer les paramètres spatiaux et pour l'agrégation des sections d'image (10,12) de l'objet en une image globale en trois dimensions de l'objet partiel (22,23).

17. Dispositif d'imagerie de structures de surface selon la revendication 1, **caractérisé en ce que** le dispositif de corrélation (24) est employé dans les objets partiels (22,23) se trouvant dans la position de référence (R).

18. Dispositif d'imagerie de structures de surface selon la revendication 17, **caractérisé en ce que** le dispositif de corrélation est réalisé comme un axe (24) et les objets partiels (22,23) sont disposés de manière basculante.

19. Dispositif d'imagerie de structures de surface selon la revendication 1, **caractérisé en ce que** le dispositif de corrélation (25) et les objets partiels (22,23) sont reliés de manière rigide par des zones de raccord (26) et le dispositif de corrélation présente une base mobile par basculement ou rotation (25).

20. Dispositif d'imagerie de structures de surface selon la revendication 19, **caractérisé en ce que** la base mobile par basculement ou rotation du dispositif de corrélation est réalisée comme une articulation à rotule (25).

21. Dispositif d'imagerie de structures d'objets selon la revendication 1 ou 15, **caractérisé en ce que** un scanneur à plat (2) ou un scanneur laser est employé comme dispositif d'acquisition optique de la surface d'au moins deux objets partiels.

22. Dispositif d'imagerie de structures de surface selon la revendication 1 ou 15, **caractérisé en ce que** les objets partiels (22,23) à représenter par imagerie consistent en un objet d'une application dentaire.

23. Dispositif d'imagerie de structures de surface selon la revendication 21, **caractérisé en ce que** la position de référence (R) acquiert la position relative l'une par rapport à l'autre de la mâchoire supérieure et la mâchoire inférieure.

24. Dispositif d'imagerie de structures de surface selon la revendication 21, **caractérisé en ce que** celui-ci est employé pour l'acquisition, la représentation, la documentation, l'archivage et/ou l'analyse de modèles de dents (3) ou de mâchoires (21,22,23), de malformations de dents ou de mâchoires, d'enregistrements d'occlusion, d'enregistrements de relation de mâchoires ou d'occlusions et/ou de préparations des dents.
